# FASCICULE DE BREVET EUROPEEN

(11) **EP 3 181 395 B1**
(45) Date de publication et mention de la délivrance du brevet: **28.11.2018**
(21) Numéro de dépôt: 16203472.2
(22) Date de dépôt: 12.12.2016
(51) Int. Cl.: B60N 2/75, B60N 2/30, B60N 2/06

(54) **BANQUETTE TROIS PLACES CONVERTIBLE EN BANQUETTE DEUX SIEGES**
BANK MIT DREI SITZPLÄTZEN, DIE UMWANDELBAR IST IN BANK MIT ZWEI SITZEN
THREE-SEATER BENCH SEAT CONVERTIBLE INTO A TWO-SEATER BENCH SEAT

(30) Priorité: 18.12.2015 FR 1562795
(43) Date de publication de la demande: 21.06.2017
(73) Titulaire: Renault S.A.S., 92100 Boulogne-Billancourt (FR)
(72) Inventeur: HEWAK, GREGOR, 95490 VAUREAL (FR); BEZEAULT, LOIC, 78150 LE CHESNAY (FR); GIUSTINO, GIOVANNI, 78350 JOUY EN JOSAS (FR)

(56) Documents cités:
- DE-A1-102005 032 602
- DE-A1-102008 017 711
- GB-A- 2 388 313

## Description

L'invention se rapporte à une banquette à trois sièges, convertible en une banquette à deux sièges.

Plus précisément une banquette selon l'invention est apte à passer d'une configuration possédant trois sièges ordinaires à une configuration possédant deux sièges confortables, de façon simple et rapide, sans manipulations compliquées et sans l'utilisation d'un outillage. Une telle banquette peut avantageusement constituer une banquette arrière d'un véhicule automobile. Document DE 102005032602 A1 divulgue une banquette possédant trois sièges alignés dont l'un est en position centrale et les deux autres sont en position latérale, chacun desdits sièges possédant une assise et un dossier, l'assise du siège central étant apte à se replier contre le dossier dudit siège pour constituer avec lui un assemblage compact, et une face inférieure de ladite assise centrale étant configurée pour supporter deux accoudoirs.

L'invention a pour objet une banquette possédant trois sièges alignés, dont l'un est en position centrale et les deux autres sont en position latérale, chacun desdits sièges possédant une assise et un dossier.

La principale caractéristique d'une banquette selon l'invention est que l'assise du siège central est apte à se replier contre le dossier dudit siège pour constituer avec lui un assemblage compact, lesdits sièges latéraux étant ensuite déplacés en se rapprochant l'un de l'autre jusqu'à ce que leurs dossiers viennent en contact avec l'assise centrale repliée, une face inférieure de ladite assise centrale étant configurée pour supporter deux accoudoirs. Le principe de cette banquette est de replier l'assise du siège central contre le dossier dudit siège central. A l'issue de ce rabattement, la face avant de l'assise centrale repliée contre le dossier central se retrouve décalée par rapport à la face avant des deux dossiers des sièges latéraux. Il convient alors de déplacer les des deux sièges latéraux en les rapprochant l'un de l'autre, jusqu'à ce que leurs dossiers viennent en contact avec l'assise repliée. En effet, il est supposé que la largeur de l'assise centrale est inférieure à celle du dossier central, permettant aux deux sièges latéraux de se déplacer pour se rapprocher l'un de l'autre, jusqu'à ce que leurs dossiers viennent au contact de l'assise repliée. De cette manière, le siège central n'est plus fonctionnel, et les deux sièges latéraux deviennent plus confortables en proposant aux occupants du véhicule un espace de vie plus important. Dans une position fonctionnelle, l'assise du siège centrale s'étend dans un plan sensiblement horizontal et présente une face supérieure sur laquelle vient s'asseoir un individu et une face inférieure située sous ladite assise. En venant se rabattre contre le dossier central, la face inférieure de l'assise devient une face avant du siège central, s'étendant dans un plan sensiblement vertical. Préférentiellement, une banquette selon l'invention constitue une banquette arrière d'un véhicule automobile. Les accoudoirs peuvent constituer, soit deux pièces distinctes, soit une pièce monobloc élargie et vont servir d'accoudoirs pour les deux sièges latéraux résultants. Le déplacement des deux sièges latéraux pour se rapprocher l'un de l'autre s'effectue selon une trajectoire rectiligne ayant une composante selon un axe longitudinal de la banquette et une composante perpendiculaire audit axe.

De façon préférentielle, la largeur de l'assise centrale est inférieure à la largeur du dossier central. Il est supposé que l'assise centrale et le dossier central représente respectivement l'assise et le dossier du siège central. La largeur est la dimension de l'assise et du dossier considérée le long d'un axe longitudinal de la banquette. Dans une configuration banquette à trois sièges, les deux dossiers latéraux sont en contact avec le dossier central. Dans une configuration à deux sièges lesdits dossiers latéraux sont au contact de l'assise repliée qui est moins large que le dossier central. Pour assurer ce contact, les deux sièges latéraux sont contraints d'être déplacés pour se rapprocher l'un de l'autre.

Avantageusement, chaque accoudoir correspond à un accoudoir pour chaque siège latéral. Le siège central, une fois escamoté, permet d'octroyer plus d'espace aux sièges latéraux et de servir de support à un accoudoir pour chacun desdits sièges latéraux.

De façon préférentielle, les deux accoudoirs constituent des pièces rapportées aptes à venir se fixer sur la face inférieure de l'assise centrale.

Préférentiellement, chaque accoudoir vient se clipper sur la face inférieure de l'assise centrale. Les accoudoirs n'étant généralement pas soumis à des contraintes importantes, ils peuvent être fixés par clippage sans risque d'être endommagés ou déplacés.

De façon avantageuse, les accoudoirs sont rangés dans l'assise centrale et peuvent se déployer dans une position fonctionnelle par rotation dans ladite assise. Cette configuration est la moins encombrante et la plus pratique, car les risques de perte ou d'égarement desdits accoudoirs sont nuls. De plus, leur déploiement est automatique et ne nécessite donc pas un ajustement de montage très précis.

Avantageusement, chaque accoudoir possède un premier segment qui est au contact de l'assise centrale sur toute sa longueur et un deuxième segment prolongeant ledit premier segment et qui saille vers l'avant selon une direction sensiblement horizontale.

De façon préférentielle, une tablette est stockée dans l'assise centrale et est apte à se déployer au moyen d'une rotation vers l'avant pour se retrouver dans une position fonctionnelle sensiblement horizontale. Le terme « sensiblement » signifie que la tablette est rigoureusement horizontale à plus ou moins 10°. Cette tablette peut par exemple faire office d'accoudoir ou servir de support à des gobelets. Elle peut également posséder un écran permettant de visualiser des vidéos. Il est supposé que cette tablette se déploie une fois seulement après que l'assise centrale ait été repliée contre le dossier central.

Préférentiellement, la tablette est configurée et positionnée de telle façon qu'elle sert d'accoudoir commun aux deux sièges latéraux. La mise en oeuvre d'une seule pièce est plus aisée que celle de deux pièces distinctes car elle n'implique qu'un seul mécanisme de déplacement contrairement à deux pièces distinctes.

De façon avantageuse, la tablette possède deux ouvertures aptes à supporter des gobelets.

L'invention a pour autre objet un procédé de transformation d'une banquette à trois sièges selon l'invention, en une banquette à deux sièges, La principale caractéristique d'un procédé selon l'invention est qu'il comporte les étapes suivantes,
- une étape de rabattement de l'assise centrale contre le dossier central,
- une étape de rapprochement des deux sièges latéraux jusqu'à ce que leurs dossiers viennent en contact avec l'assise centrale repliée contre le dossier central,
- une étape de mise en oeuvre de deux accoudoirs sur la face inférieure de l'assise centrale repliée contre le dossier central.

Une banquette selon l'invention présente l'avantage de pouvoir être convertie en une banquette à deux sièges grâce à un mécanisme simple et rapide à mettre en oeuvre, ne nécessitant ni une manipulation compliquée, ni l'utilisation d'un outillage spécifique. Elle a de plus l'avantage de conférer au véhicule dans laquelle elle est montée un caractère de modularité en proposant une version utilitaire privilégiant plutôt le nombre de passagers et une version confort en se focalisant plutôt sur la qualité des sièges notamment au niveau des espaces qu'ils proposent.

On donne ci-après une description détaillée de deux modes de réalisation préférés d'une banquette convertible selon l'invention en se référant aux figures suivantes :
- Les figures 1A, 1B, 1C, 1D et 1E sont des vues en perspective d'un premier mode de réalisation préféré d'une banquette selon l'invention, respectivement dans une configuration à trois sièges, puis dans trois positions intermédiaires progressives et enfin dans une configuration à deux sièges,
- Les figures 2A, 2B, 2C, 2D, 2E et 2F sont des vues en perspective d'un deuxième mode de réalisation préféré d'une banquette selon l'invention, respectivement dans une configuration à trois sièges, puis dans quatre positions intermédiaires progressives et enfin dans une configuration à deux sièges,
- La figure 3 est une vue du dessus des rails de guidage des trois sièges d'une banquette selon le deuxième mode de réalisation.

La description détaillée ci-après, est effectuée comme si la banquette était placée dans un véhicule automobile. Ainsi, les notions de « avant », « arrière », « latéral » et « transversal » se rapporte au véhicule dans lequel serait montée la banquette.

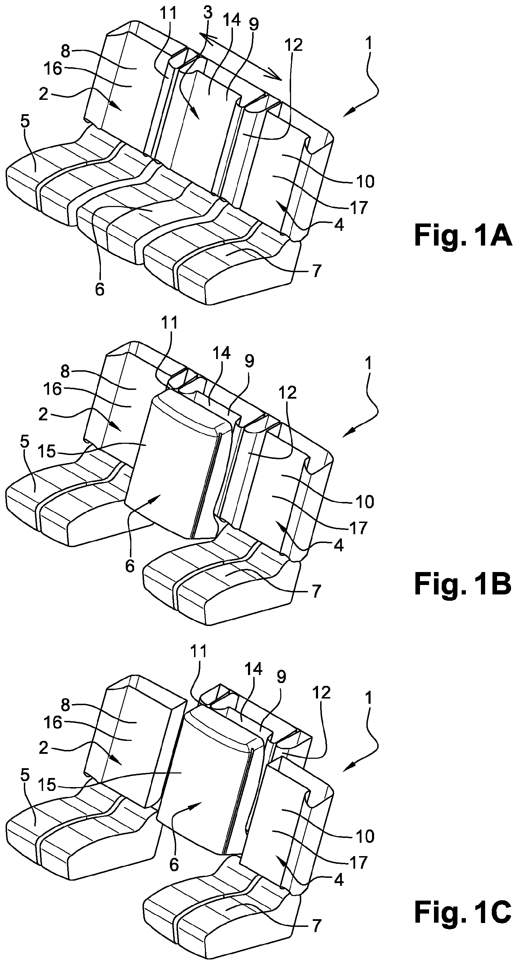

En se rapportant à la figure 1A, une banquette 1 selon un premier mode de réalisation préféré de l'invention comprend trois sièges 2, 3, 4 alignés selon un axe transversal, dont un siège central 3 encadré par deux sièges latéraux 2, 4. Chacun desdits sièges 2, 3, 4 possède une assise 5, 6, 7 et un dossier 8, 9, 10, chacune desdites assises 5, 6, 7 étant sensiblement identique d'un siège à l'autre. Le dossier 9 du siège central 3 est élargi selon une direction longitudinale de la banquette 1, par rapport à chacun des dossiers 8, 10 des sièges latéraux 2, 4. Plus précisément, ce dossier central possède deux montants 11, 12 de maintien latéral, chacun desdits montants 11, 12 s'étendant selon une direction matérialisant une légère inclinaison du dossier central 9 par rapport à un plan rigoureusement vertical, lesdits montants 11, 12 saillant vers l'avant. De cette manière, la face avant 14 du dossier central 9 contre laquelle est destiné à venir en appui le dos d'un occupant se retrouve en retrait par rapport à ces montants de maintien 11, 12, autrement dit légèrement en arrière de ceux-ci. Ces montants 11, 12 servent également de maintien latéral pour chacun des deux sièges latéraux 2, 4.

En se référant à la figure 1B, lorsqu'il est décidé de convertir cette banquette 1 à trois sièges 2, 3, 4 en banquette à deux sièges 2, 4, l'assise 6 du siège central 3 pivote d'environ 90°, à plus ou moins 15° près, pour venir se plaquer contre le dossier 9 du siège central 3, entre les deux montants 11, 12 de maintien. Cette rotation de l'assise 6 est effectuée autour d'un axe horizontal s'étendant selon une direction longitudinale de la banquette 1, ledit axe étant placé à l'arrière de l'assise 6 au niveau de la jonction de ladite assise 6 avec le dossier 9. Une fois repliée contre le dossier central 9, l'assise 6 saille vers l'avant de la banquette 1. Il est à préciser que la largeur de l'assise centrale 6 est inférieure à celle du dossier central 9 comprenant les deux montants 11, 12 de maintien. La largeur représente la dimension de ladite assise 6 et dudit dossier 9 selon un axe longitudinal de la banquette 1.

En se référant à la figure 1C, l'assemblage constitué par l'assise centrale 6 et le dossier central 9 est reculé de manière à ce qu'une face inférieure 15 de ladite assise centrale 6 vienne en continuité des faces avants 16, 17 des deux dossiers 8, 10 des sièges latéraux 2, 4. Ce recul entraine la création de deux espaces 18, 19 latéraux laissés par les deux montants de maintien 11, 12 entre l'assise centrale 6 repliée contre le dossier central 9 et les dossiers 8, 10 des sièges latéraux 2, 4. Il est à noter, que l'assise 6 centrale, lorsqu'elle est dans une position fonctionnelle, s'étend dans un plan sensiblement horizontal. Elle présente alors une surface supérieure sensiblement horizontale sur laquelle est destiné à venir s'asseoir un individu, et une surface inférieure 15 s'étendant dans un plan sensiblement horizontal et situé sous ladite assise 6. En étant rabattue contre le dossier central 9, cette face inférieure 15 de l'assise 6 devient une face avant 15 de l'assemblage constitué par l'assise centrale 6 et le dossier central 9.

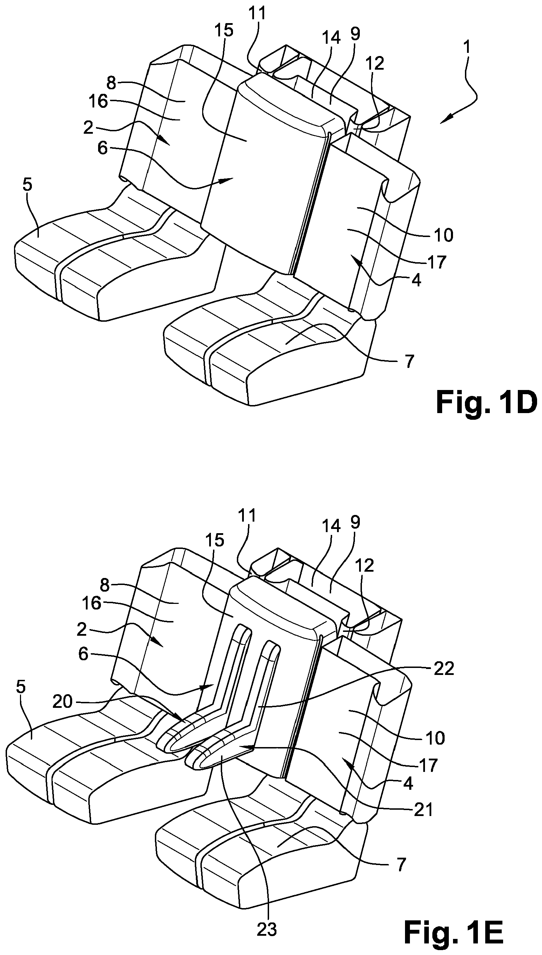

En se référant à la figure 1D, les deux sièges latéraux 2, 4 sont déplacés l'un vers l'autre pour combler les deux espaces latéraux 2, 4 laissés par les deux montants de maintien 11, 12, jusqu'à ce que les dossiers 8, 10 viennent en contact avec l'assise 6 centrale repliée contre le dossier central 9.

En se référant à la figure 1E, deux accoudoirs 20, 21 viennent se fixer sur la face inférieure 15 de l'assise centrale 6, chacun desdits accoudoirs 20, 21 servant d'accoudoir pour un siège latéral 2, 4. Chaque accoudoir 20, 21 possède un premier segment 22 en contact sur toute sa longueur avec ladite face inférieure 15, et un deuxième segment 23 prolongeant ledit premier segment 22 et saillant vers l'avant de ladite face inférieure 15. Chaque accoudoir 20, 21 a ainsi une forme en L, le premier segment 22 servant de point d'ancrage de l'accoudoir 20, 21 sur l'assise centrale 6 et le deuxième segment 23 permet de faire reposer un coude ou un avant-bras d'un passager qui serait assis sur l'un des deux sièges latéraux 2, 4. Ces deux accoudoirs 20, 21 viennent se clipper sur l'assise centrale 6 repliée.

Cette banquette 1 à deux sièges 2, 4 peut tout aussi simplement et rapidement se convertir en une banquette à trois sièges 2, 3, 4 en effectuant les manipulations précédemment décrites en sens inverse.

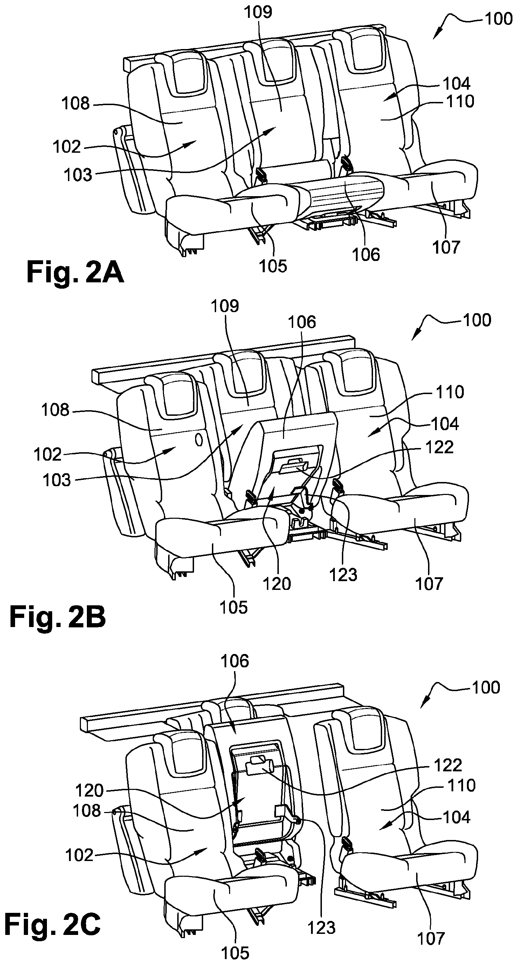

En se référant à la figure 2A, une banquette 100 selon un deuxième mode de réalisation préféré de l'invention comprend trois sièges 102, 103, 104 alignés selon un axe transversal, dont un siège central 103 encadré par deux sièges latéraux 102, 104. Chacun desdits sièges 102, 103, 104 possède une assise 105, 106, 107 et un dossier 108, 109, 110, chacune desdites assises 105, 106, 107 étant sensiblement identique d'un siège à l'autre.

En se référant à la figure 2B, lorsqu'il est décidé de convertir cette banquette 100 à trois sièges 102, 103, 104 en banquette à deux sièges 102, 104, l'assise 106 du siège central 103 pivote d'environ 90°, à plus ou moins 15° près, pour venir se plaquer contre le dossier 109 du siège central 103. Cette rotation de l'assise 106 est effectuée autour d'un axe horizontal s'étendant selon une direction longitudinale de la banquette 100, ledit axe étant placé à l'arrière de l'assise 106 au niveau de la jonction de ladite assise 106 avec le dossier 103. Ce repli de l'assise 106 contre le dossier central 109 s'accompagne d'un recul du siège central 103 par rapport aux deux sièges latéraux 102, 104, ledit repli et ledit recul étant concomitants. Il est à noter que la largeur de l'assise centrale 106 est inférieure à celle du dossier central 109. La largeur représente la dimension de ladite assise 106 et dudit dossier 19 selon un axe longitudinal de la banquette 100.

En se référant à la figure 2C, une fois que l'assise 106 est totalement relevée, le siège central 103 est complètement reculé. Cette assise 106 possède un accoudoir 120, qui est apte à passer d'une position escamotée pour laquelle il est rangé dans un logement 121 de ladite assise 106, à une position fonctionnelle pour laquelle il saille vers l'avant de ladite assise centrale 106. Dans sa position escamotée, l'accoudoir 120 est complètement rentré dans l'assise 106 sans dépasser de celle-ci. Une partie supérieure de l'accoudoir 120 est dotée d'une poignée 122 pour permettre à un individu de se saisir dudit accoudoir 120 lorsqu'il est rentré dans l'assise 106, afin de le déployer dans une position fonctionnelle.

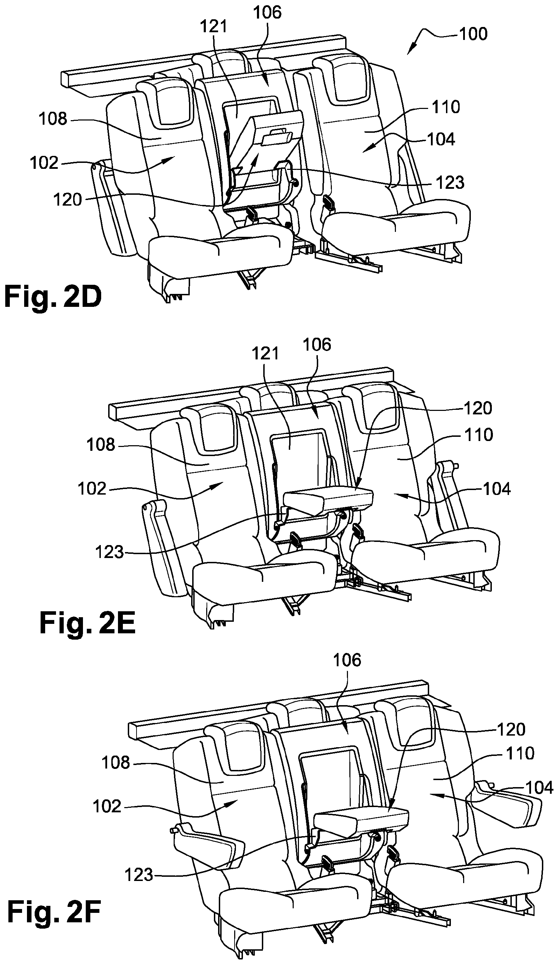

En se référant aux figures 2D et 2E cet accoudoir 120 est assimilable à une plaque rectangulaire et de faible épaisseur et qui est monté dans l'assise 106 au moyen de deux pattes 123 pivotantes. De cette manière, ledit accoudoir effectue une rotation d'environ 90°, plus ou moins 15°, pour passer de la position escamotée à la position fonctionnelle, qui est une position sensiblement horizontale.

En se référant aux figures 2D, 2E et 2F, les deux sièges latéraux 102, 104 sont déplacés pour permettre aux dossiers 108, 110 desdits sièges latéraux 102, 104 de se retrouver au niveau de l'assise centrale 106 du siège central 103 qui a été préalablement reculé. Ce déplacement se traduit par un rapprochement desdits deux sièges latéraux 102, 104 jusqu'à ce que leurs dossiers 108, 110 viennent au contact de l'assise centrale 106 repliée contre le dossier central 109. L'accoudoir 120 déployé dans l'assise 106 centrale repliée contre le dossier central 109 sert d'accoudoir commun aux deux sièges latéraux 102, 104.

Cette banquette 100 à deux sièges 102, 104 peut tout aussi simplement et rapidement se convertir en une banquette à trois sièges 102, 103, 104 en effectuant les manipulations précédemment décrites en sens inverse.

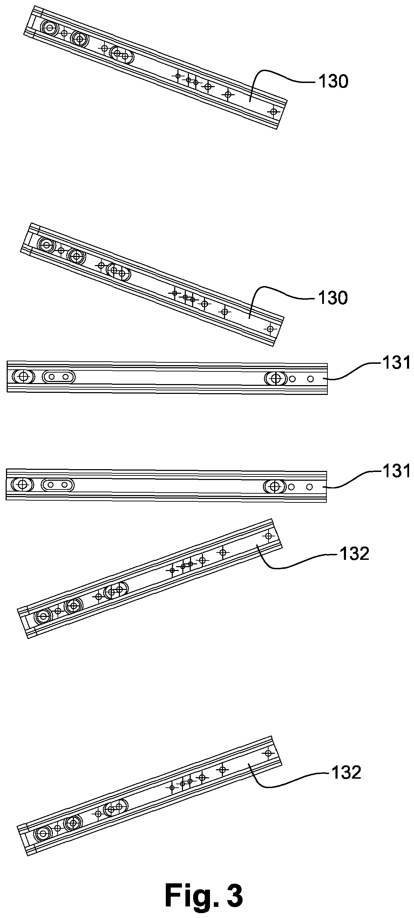

En se référant à la figure 3, les trois sièges 102, 103, 104 d'une banquette 100 selon le deuxième mode de réalisation préféré, sont montés sur des rails 130, 131, 132 pour permettre leur déplacement au sein d'un véhicule, afin de les positionner au plus juste. Le siège central 103 est ainsi placé sur deux rails 131 parallèles à un axe longitudinal du véhicule, et chacun des deux sièges latéraux 102, 104 est placé sur deux rails 130, 132 faisant un angle compris entre 15° et 25° avec les rails 131 du siège central 103. Ce non parallélisme entre les rails du siège central 103 et les rails 130, 132 des deux sièges latéraux 102, 104, permet auxdits deux sièges latéraux 102, 104 d'occuper des positions éloignées l'une de l'autre lorsque la banquette 100 est dans une configuration à trois sièges 102, 103, 104, et de se rapprocher l'un de l'autre lors de la conversion de ladite banquette 100 en banquette à deux sièges 102, 104.

## Revendications

1. Banquette (1, 100) possédant trois sièges alignés (2, 102, 3, 103, 4, 104), dont l'un (3, 103) est en position centrale et les deux autres (2, 102, 4, 104) sont en position latérale, chacun desdits sièges (2, 102, 3, 103, 4, 104) possédant une assise (5, 105, 6, 106, 7, 107) et un dossier (8, 108, 9, 109, 10, 110), l'assise (6, 106) du siège central (3, 103) étant apte à se replier contre le dossier (9, 109) dudit siège (3, 103) pour constituer avec lui un assemblage compact, et lesdits sièges latéraux (2, 102, 4, 104) étant
ensuite déplacés en se rapprochant l'un de l'autre jusqu'à ce que leurs dossiers (8, 108, 10, 110) viennent en contact avec l'assise centrale repliée (6, 106), une face inférieure (15) de ladite assise centrale (6, 106) étant configurée pour supporter deux accoudoirs (20, 21, 120).

2. Banquette selon la revendication 1, **caractérisée en ce que** la largeur de l'assise centrale (6, 106) est inférieure à la largeur du dossier central (9, 109).

3. Banquette selon l'une quelconque des revendications 1 ou 2, **caractérisé en ce que** chaque accoudoir (20, 21, 120) correspond à un accoudoir pour chaque siège latéral (2, 102, 4, 104).

4. Banquette selon l'une quelconque des revendications 1 à 3, **caractérisée en ce que** les deux accoudoirs (20, 21) constituent des pièces rapportées aptes à venir se fixer sur la face inférieure (15) de l'assise centrale (6).

5. Banquette selon la revendication 4, **caractérisée en ce que** chaque accoudoir (20, 21) vient se clipper sur la face inférieure (15) de l'assise centrale (6).

6. Banquette selon l'une quelconque des revendications 1 à 3, **caractérisée en ce que** les accoudoirs (20, 21, 120) sont rangés dans l'assise centrale (6, 106) et peuvent se déployer dans une position fonctionnelle par rotation dans ladite assise (6, 106).

7. Banquette selon l'une quelconque des revendications 4 à 6, **caractérisée en ce que** chaque accoudoir (20, 21) possède un premier segment (22) qui est au contact sur toute sa longueur de l'assise centrale (6) et un deuxième segment (23) prolongeant ledit premier segment (22) et qui saille vers l'avant selon une direction sensiblement horizontale.

8. Banquette selon l'une quelconque des revendications 1 ou 2, **caractérisée en ce qu'**une tablette (120) est stockée dans l'assise (106) centrale et est apte à se déployer au moyen d'une rotation vers l'avant pour se retrouver dans une position fonctionnelle sensiblement horizontale.

9. Banquette selon la revendication 8, **caractérisée en ce que** la tablette (120) est configurée et positionnée de telle façon qu'elle sert d'accoudoir commun aux deux sièges latéraux (102, 104).

10. Procédé de transformation d'une banquette (1, 100) à trois sièges (2, 102, 3, 103, 4, 104) selon l'une quelconque des revendications 1 à 9, en une banquette à deux sièges (2, 102, 4, 104), le procédé comportant les étapes suivantes,
- une étape de repli de l'assise centrale (6, 106) contre le dossier central (9, 109),
- une étape de rapprochement des deux sièges latéraux (2, 102, 4, 104) jusqu'à ce que leurs dossiers (8, 108, 10, 110) viennent en contact avec l'assise centrale (6, 106) repliée contre le dossier central (9, 109),
- une étape de mise en oeuvre de deux accoudoirs (20, 21, 120) sur l'assise centrale (6, 106) repliée contre le dossier central (9, 109).

## Patentansprüche

1. Sitzbank (1, 100), welche drei aneinander gereihte Sitze (2, 102, 3, 103, 4, 104) besitzt, von denen sich der eine (3, 103) in zentraler Position befindet und sich die beiden anderen (2, 102, 4, 104) in seitlicher Position befinden, wobei jeder der Sitze (2, 102, 3, 103, 4, 104) eine Sitzfläche (5, 105, 6, 106, 7, 107) und eine Rückenlehne (8, 108, 9, 109, 10, 110) besitzt, wobei die Sitzfläche (6, 106) des zentralen Sitzes (3, 103) dafür geeignet ist, gegen die Rückenlehne (9, 109) des Sitzes (3, 103) umzuklappen, um mit diesem eine kompakte Anordnung zu bilden, und wobei die seitlichen Sitze (2, 102, 4, 104) dann bewegt werden, indem sie einander angenähert werden, bis ihre Rückenlehnen (8, 108, 10, 110) mit der umgeklappten, zentralen Sitzfläche (6, 106) in Kontakt kommen, wobei eine untere Fläche (15) der zentralen Sitzfläche (6, 106) dafür ausgelegt ist, um zwei Armlehnen (20, 21, 120) zu tragen.

2. Sitzbank nach Anspruch 1, **dadurch gekennzeichnet, dass** die Breite der zentralen Sitzfläche (6, 106) kleiner als die Breite der zentralen Rückenlehne (9, 109) ist.

3. Sitzbank nach einem der Ansprüche 1 oder 2, **dadurch gekennzeichnet, dass** jede Armlehne (20, 21, 120) einer Armlehne für jeden seitlichen Sitz (2, 102, 4, 104) entspricht.

4. Sitzbank nach einem der Ansprüche 1 bis 3, **dadurch gekennzeichnet, dass** die beiden Armlehnen (20, 21) eingebrachte Teile bilden, welche dafür geeignet sind, an der unteren Fläche (15) der zentralen Sitzfläche (6) befestigt zu werden

5. Sitzbank nach Anspruch 4, **dadurch gekennzeichnet, dass** jede Armlehne (20, 21) sich an der unteren Fläche (15) der zentrale Sitzfläche (6) festgeklemmt.

6. Sitzbank nach einem der Ansprüche 1 bis 3, **dadurch gekennzeichnet, dass** die Armlehnen (20, 21, 120) in der zentralen Sitzfläche (6, 106) aufgeräumt sind und sich durch Drehung in der Sitzfläche (6, 106) in eine Funktionsstellung entfalten können.

7. Sitzbank nach einem der Ansprüche 4 bis 6, **dadurch gekennzeichnet, dass** jede Armlehne (20, 21) ein erstes Segment (22), welches über seine gesamte Länge mit der zentralen Sitzfläche (6) in Kontakt ist, und ein zweites Segment (23) besitzt, welches das erste Segment (22) verlängert und gemäß einer im Wesentlichen horizontalen Richtung nach vorne vorspringt.

8. Sitzbank nach einem der Ansprüche 1 oder 2, **dadurch gekennzeichnet, dass** ein Tablett (120) in der zentralen Sitzfläche (106) gelagert und dafür geeignet ist, um mittels einer Drehung nach vorne sich zu entfalten, um sich in einer im Wesentlichen horizontalen Funktionsstellung zu befinden.

9. Sitzbank nach Anspruch 8, **dadurch gekennzeichnet, dass** das Tablett (120) dafür ausgelegt und positioniert ist, dass es den seitlichen Sitzen (102, 104) als gemeinsame Armlehne dient.

10. Verfahren zum Umwandeln einer Sitzbank (1, 100) mit drei Sitzen (2, 102, 3, 103, 4, 104) nach einem der Ansprüche 1 bis 9 in eine Sitzbank mit zwei Sitzen (2, 102, 4, 104), wobei das Verfahren die folgenden Schritte umfasst:
- einen Schritt des Umklappens der zentralen Sitzfläche (6, 106) gegen die zentrale Rückenlehne (9, 109),
- einen Schritt des Annäherns der beiden seitlichen Sitze (2, 102, 4, 104) bis ihre Rückenlehnen (8, 108, 10, 110) mit der gegen die zentrale Rückenlehne (9, 109) umgeklappten, zentralen Sitzfläche (6, 106) in Kontakt kommen,
- einen Schritt des Einsetzens von zwei Armlehnen (20, 21, 120) auf der gegen die zentrale Rückenlehne (9, 109) umgeklappten, zentralen Sitzfläche (6, 106).

## Claims

1. Bench seat (1,100) having three aligned seats (2, 102, 3, 103, 4, 104) of which one (3, 103) is in a central position and the other two (2, 102, 4, 104) are in a lateral position, each of the said seats (2, 102, 3, 103, 4, 104) having a seating portion (5, 105, 6, 106, 7, 107) and a backrest (8, 108, 9, 109, 10, 110), the seating portion (6, 106) of the central seat (3, 103) being able to be folded up against the backrest (9, 109) of the said seat (3, 103) in order therewith to constitute a compact assembly, and the said lateral seats (2, 102, 4, 104) then being moved in closer to one another until their backrests (8, 108, 10, 110) come into contact with the folded-up central seating portion (6, 106), an underside face (15) of the said central seating portion (6, 106) being configured to support two armrests (20, 21, 120).

2. Bench seat according to Claim 1, **characterized in that** the width of the central seating portion (6, 106) is less than the width of the central backrest (9, 109).

3. Bench seat according to either one of Claims 1 and 2, **characterized in that** each armrest (20, 21, 120) corresponds to an armrest for each lateral seat (2, 102, 4, 104).

4. Bench seat according to any one of Claims 1 to 3, **characterized in that** the two armrests (20, 21) constitute added components that can be attached to the underside face (15) of the central seating portion (6).

5. Bench seat according to Claim 4, **characterized in that** each armrest (20, 21) is clipped onto the underside face (15) of the central seating portion (6) .

6. Bench seat according to any one of Claims 1 to 3, **characterized in that** the armrests (20, 21, 120) are stowed in the central seating portion (6, 106) and can be deployed into a functional position through rotation in the said seating portion (6, 106).

7. Bench seat according to any one of Claims 4 to 6, **characterized in that** each armrest (20, 21) has a first segment (22) which is in contact along its entire length with the central seating portion (6) and a second segment (23) extending the said first segment (22) and which projects forward in a substantially horizontal direction.

8. Bench seat according to either one of Claims 1 and 2, **characterized in that** a tray (120) is stored in the central seating portion (106) and can be deployed by means of a rotation forwards into a substantially horizontal functional position.

9. Bench seat according to Claims 8, **characterized in that** the tray (120) is configured and positioned in such a way that it acts as an armrest common to the two lateral seats (102, 104).

10. Method for converting a bench seat (1, 100) having three seats (2, 102, 3, 103, 4, 104) according to any one of Claims 1 to 9 into a bench seat having two seats (2, 102, 4, 104), the method comprising the following steps
- a step of folding the central seating portion (6, 106) up against the central backrest (9, 109),
- a step of moving the two lateral seats (2, 102, 4, 104) closer together until their backrests (8, 108, 10, 110) come into contact with the central seating portion (6, 106) folded up against the central backrest (9, 109),
- a step of employing two armrests (20, 21, 120) on the central seating portion (6, 106) that is folded up against the central backrest (9, 109).
